# EUROPEAN PATENT APPLICATION

(11) **EP 1 511 334 A1**
(43) Date of publication of application: **02.03.2005**
(21) Application number: 03728082.3
(22) Date of filing: 16.05.2003
(51) Int. Cl.: H04Q 7/30, H04B 1/74, H04B 1/04, H04B 17/00

(54) **METHOD FOR PREVENTING ERRONEOUS DETECTION OF TRANSMISSION OUTPUT LEVEL ERROR IN A RADIO BASE STATION DEVICE AND RADIO BASE STATION DEVICE**

(30) Priority: 17.05.2002 JP 2002143643
(71) Applicant: NEC Corporation, Minato-ku, Tokyo 108-8001 (JP)
(72) Inventor: ITOHARA, Tetsu, NEC Mobiling, Ltd., Yokohama-shi, Kanagawa 222-8540 (JP)
(74) Representative: Glawe. Delfs. Moll
(86) International application number: PCT/JP2003/006126
(87) International publication number: WO 2003/098949

(57) **Abstract**

When a radio transmission/reception function section (card A) (60) has detected an error of the transmission output level, a call processing monitoring control function section (card D) (70) notifies whether the resource state is normal to the radio transmission/reception function section (card A) (60). When an abnormal resource state is notified, the radio transmission/reception function section (card A) (60) stops transmission if an abnormal resource state is notified and performs switching to a back-up radio transmission/reception function section (back-up card A) (21) if a normal resource state is notified.

## Description

### Technical Field

The present invention relates to a method for preventing erroneous detection of a transmission output level error in a CDMA radio base station device and a radio base station device.

### Background Art

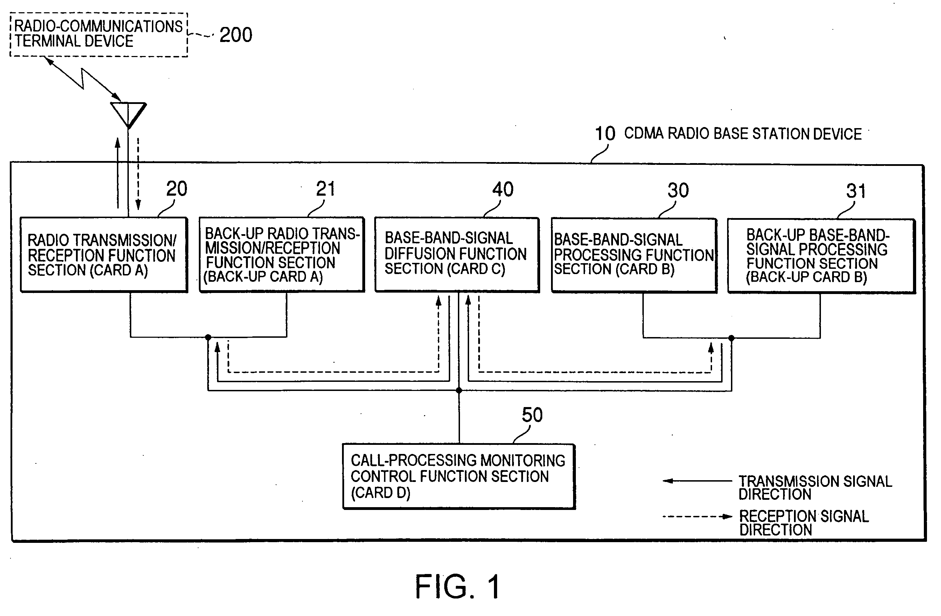

A known CDMA radio base station device will now be described with reference to Fig. 1. A CDMA radio base station device 10 includes a radio transmission/reception function section (card A) 20, a base-band-signal processing function section (card B) 30, a base-band-signal diffusion function section (card C) 40, and a call-processing monitoring control function section (card D) 50. The CDMA radio base station device 10 further includes a back-up radio transmission/reception function section (back-up card A) 21 and a back-up base-band-signal processing function section (back-up card B) 31.

The CDMA radio base station device 10 needs to monitor an error of a transmission output level for ensuring a stable line quality. The CDMA radio base station device 10 monitors a breakdown of a radio unit section forming the radio transmission/reception function section (card A) 20 for detecting the transmission output level error.

However, the transmission output level error may be erroneously detected according to the resource state of the base-band-signal processing function section (card B) 30 and the base-band-signal diffusion function section (card C) 40. Upon detecting the transmission output level error, the radio transmission/reception function section (card A) 20 determines that it is in a breakdown state and performs switching to the back-up radio transmission/reception function section (back-up card A) 21. However, where the resource state is abnormal, the back-up radio transmission/reception function section (back-up card A) 21 after switching also detects the transmission output level error, which brings the back-up radio transmission/reception function section (back-up card A) 21 to the breakdown state. In that case, a mobile communications system including the CDMA radio base station device 10 is brought to an interruption state.

That is to say, the known CDMA base station device has the following problems. Where a breakdown occurs in the base-band-signal processing function section (card B) 30, an abnormal call is generated, and the base-band-signal diffusion function section (card C) 40 transmits a burst signal to the radio transmission/reception function section (card A) 20, the resource state becomes abnormal. In that case, requirements for the error of the transmission output level of the radio transmission/reception function section (card A) 20 are fulfilled and the radio transmission/reception function section (card A) 20 is brought to the breakdown state in appearance.

The radio transmission/reception function section (card A) 20 in the breakdown state switches to the back-up radio transmission/reception function section (back-up card A) 21. However, except in the case where the abnormal resource state is restored, the back-up radio transmission/reception function section (back-up card A) 21 detects the transmission output level error, as in the above-described manner, and is brought to the breakdown state. Subsequently, the system interruption occurs.

Accordingly, the object of the present invention is to determine whether the resource state is normal or abnormal, where the radio transmission/reception function section (card A) fulfills the requirements for the transmission-output-level error, and determines that the radio transmission/reception function section (card A) is in the breakdown state only when the resource state is normal. Subsequently, the quality stability and maintainability of communications are increased.

### Disclosure of Invention

A method according to a first mode of the present invention is a method for preventing erroneous detection of a transmission output level error in a radio base station device including a radio transmission/reception unit for monitoring a transmission output level and performing radio transmission and radio reception. The method is characterized in that the radio transmission/reception unit stops data transmission, where the transmission output level is abnormal and the state of a resource required for making call settings is abnormal.

A method according to a second mode of the present invention is a method for preventing erroneous detection of a transmission output level error in a radio base station device including a radio transmission/reception unit for monitoring a transmission output level and performing radio transmission and radio reception, and a call-processing monitoring control unit for assigning a resource required for making call settings and monitoring the state of the resource. The method is characterized in that the call-processing monitoring control unit notifies the radio transmission/reception unit about whether the resource state is normal or abnormal, where the radio transmission/reception unit detects the transmission output level error, and the radio transmission/reception unit stops data transmission by being notified that the resource state is abnormal and switches to a back-up radio transmission/reception unit by being notified that the resource state is normal.

A method according to a third mode of the present invention is characterized by having the steps of detecting a transmission output level error through a radio transmission/reception unit, requesting a call-processing monitoring control unit for assigning a resource required for making call settings and monitoring the state of the resource to transmit a notification about the resource state through the radio transmission/reception unit, determining the resource state and notifying the radio transmission/reception unit about the determination result through the call-processing monitoring control unit, stopping data transmission through the radio transmission/reception unit, where the call-processing monitoring control unit notifies the radio transmission/reception unit that the resource state is abnormal, and switching from the radio transmission/reception unit to back-up radio transmission/reception unit, where the transmission output level is abnormal and the call-processing monitoring control unit notifies the radio transmission/reception unit that the resource state is normal.

A method according to a fourth mode of the present invention is a method for preventing erroneous detection of a transmission output level error in a radio base station device including a radio transmission/reception unit for monitoring a transmission output level and performing radio transmission and radio reception, and a call-processing monitoring control unit for assigning a resource required for making call settings and monitoring the state of the resource. The method is characterized by having the steps of detecting the transmission output level error through the radio transmission/reception unit, requesting the call-processing monitoring control unit to transmit a notification about the resource state through the radio transmission/reception unit, determining the resource state through the call-processing monitoring control unit, notifying the radio transmission/reception unit about the determination result through the call-processing monitoring control unit, stopping data transmission through the radio transmission/reception unit, where the call-processing monitoring control unit notifies the radio transmission/reception unit that the resource state is abnormal, keeping on requesting the call-processing monitoring control unit to transmit a notification about the resource state through the radio transmission/reception unit until the resource state is restored, restarting the data transmission through the radio transmission/reception means, where the radio transmission/reception means receives a notification that the resource state becomes normal, the notification being transmitted from the call-processing monitoring control means, and switching from the radio transmission/reception unit to a back-up radio transmission/reception unit, where the transmission output level is abnormal and the call-processing monitoring control unit notifies the radio transmission/reception unit that the resource state is normal.

Further, the transmission output level error is detected by comparing a difference between an input value transmitted to the radio transmission/reception unit and an output value transmitted from the radio transmission/reception unit to a predetermined threshold value.

The radio base station device according to the first mode of the present invention includes the radio transmission/reception unit for monitoring the transmission output level and performing the radio transmission and the radio reception. The radio base station device is characterized in that the radio transmission unit stops the data transmission, where the transmission output level is abnormal and the state of the resource required for making the call settings is abnormal.

The radio base station device according to a second mode of the present invention includes the radio transmission/reception unit for monitoring the transmission output level and performing the radio transmission and the radio reception, and the call-processing monitoring control unit for assigning the resource required for making the call settings and monitoring the state of the resource. The radio base station device is characterized in that the radio transmission/reception unit requests the call-processing monitoring control unit to transmit a notification about the resource state, where the radio transmission/reception unit detects the error of the transmission output level, the radio transmission/reception unit stops the data transmission by being notified that the resource state is abnormal and restarts the data transmission by being notified that the resource state becomes normal, and the call-processing monitoring control unit notifies the radio transmission/reception unit of the resource state upon receiving the request transmitted from the radio transmission/reception unit.

In the above-described radio base station device, the radio transmission/reception unit switches to the back-up transmission/reception unit, where the radio transmission/reception unit detects the transmission output level error and where the resource state is normal.

In the above-described radio base station device, the transmission output level error is detected by comparing a difference between an input value transmitted to the radio transmission/reception unit and an output value transmitted from the radio transmission/reception unit to a predetermined threshold value.

### Brief Description of the Drawings

Fig. 1 shows the configuration of a known CDMA radio base station device.
Fig. 2 shows the configuration of a CDMA radio base station device according to an embodiment of the present invention.
Fig. 3 is a sequence flowchart illustrating operations performed according to a method for preventing erroneous detection of a transmission output level error according to the present invention.

### Best Mode for Carrying Out the Invention

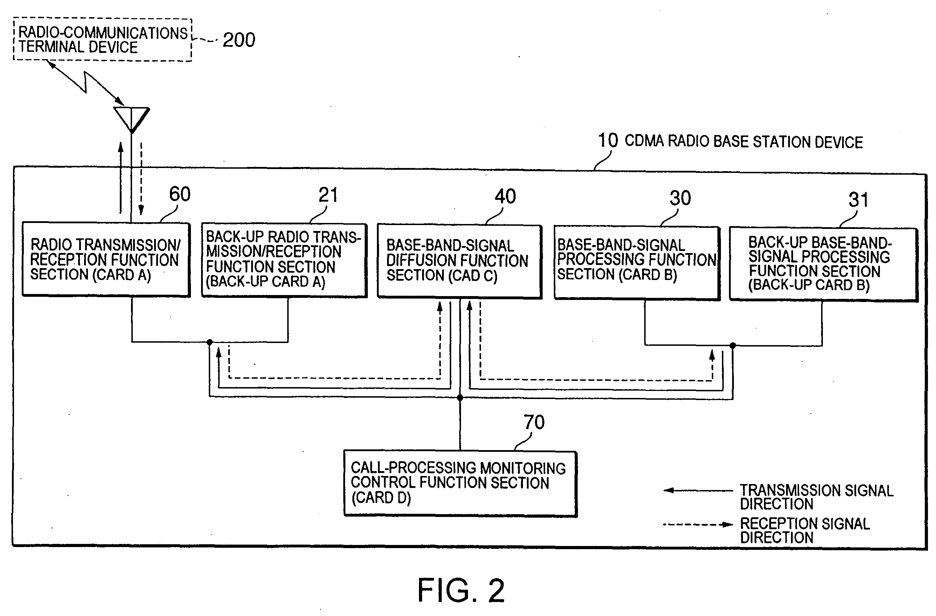

The general outline of the present invention will now be described with reference to Fig. 2. In this drawing, the same parts as those in Fig. 1 are designated by the same reference numerals. As will be clear in the following description, a CDMA radio base station device 100 of the present invention is characterized by having a radio transmission/reception function section (card A) 60 and a call-processing monitoring control function section (card D) 70 that are provided with new functions. That is to say, the CDMA radio base station device 100 includes the call-processing monitoring control function section (card D) 70 that can monitor the resource state. The call-processing monitoring control function section (card D) 70 always monitors the state of a resource that is set for a base-band-signal processing function section (card B) 30. That is to say, the call-processing monitoring control function section (card D) 70 monitors that the resource is normally set for the base-band-signal processing function section (card B) 30 and normally output to a base-band-signal diffusion function section (card C) 40. Here, the resource denotes common channels (a common pilot channel and a common control physical channel) required for making call settings.

Where requirements for the transmission output level error are fulfilled in the radio transmission/reception function section (card A) 60, the call-processing monitoring control function section (card D) 70 determines whether the resource state is normal or abnormal and notifies the radio transmission/reception function section (card A) 60 of the determination result. After being notified that the resource state is abnormal, the radio transmission/reception function section (card A) 60 stops data transmission, so as to avoid a breakdown state.

Next, the configuration and operations of the CDMA radio base station device 100 of the present invention will be described in detail.

The CDMA radio base station device 100 includes the radio transmission/reception function section (card A) 60 and a back-up radio transmission/reception function section (back-up card A) 21 provided, as a back-up section of the radio transmission/reception function section (card A) 60. The CDMA radio base station device 100 further includes the base-band-signal processing function section (card B) 30, a back-up base-band-signal processing function section (back-up card B) 31 provided, as a back-up section of the base-band-signal processing function section (card B) 30, a base-band-signal diffusion function section (card C) 40, and the call-processing monitoring control function section (card D) 70.

Here, the radio transmission/reception function section 60 is referred to as card A, the back-up radio transmission/reception function section 21 as back-up card A, the base-band-signal processing function section 30 as card B, the back-up base-band-signal processing function section 31 as back-up card B, the base-band-signal diffusion function section 40 as card C, and the call-processing monitoring control function section 70 as card D, which will be written in parentheses along with the section names in the following description.

The radio transmission/reception function section (card A) 60 includes a plurality of radio unit sections (a detection section, a difference calculation section, and so forth). The radio transmission/reception function section (card A) 60 monitors the transmission output level, detects the error thereof, and performs communications between itself and a radio-communications terminal device 200 through radio frequencies. Although not shown in the drawings, the radio transmission/reception function section (card A) 60 also includes a detection section for detecting an input value and an output value, a difference calculation section for calculating a difference between the input value and the output value, a comparison section for making a comparison between the difference and a predetermined threshold value, and an error determination section for detecting an error according to the comparison result obtained by the comparison section. Here, the input value denotes a value (an ideal transmission-power average value, for example) that is transmitted from the base-band-signal processing function section (card B) 30, diffused by the base-band-signal diffusion function section (card C) 40, and input to the radio transmission/reception function section (card A) 60. The output value denotes a value (an actual-measurement transmission-power average value, for example) that is transmitted from the radio transmission/reception function section (card A) 60.

The base-band-signal processing function section (card B) 30 is assigned a resource and makes the call settings.

Where a breakdown occurs in the base-band-signal processing function section (card B) 30, the back-up base-band-signal processing function section (back-up card B) 31 performs a remedy therein and keeps on performing the communications, as a rule. Where the back-up base-band-signal processing function section (back-up card B) 31 is not provided, however, an abnormal call is generated and the communications interruption occurs until the base-band-signal processing function section (card B) 30 is restored.

The base-band-signal diffusion function section (card C) 40 functions as a repeater between the radio transmission/reception function section (card A) 60 and the base-band-signal processing function section (card B) 30. Further, the base-band-signal diffusion function section (card C) 40 diffuses and inversely diffuses signals.

The call-processing monitoring control function section (card D) 70 assigns the resource required for making the call settings to the base-band-signal processing function section (card B) 30 and monitors the state of the resource that is set for the base-band-signal processing function section (card B) 30 at all times.

The CDMA radio base station device 100 has to maintain the transmission output at a predetermined level or higher for ensuring a stable quality. Therefore, where the difference between the input value and the output value reaches a predetermined threshold value during the radio transmission/reception function section (card A) 60 monitors the transmission output level, the radio transmission/reception function section (card A) 60 determines that the radio unit thereof is under abnormal conditions, that is to say, the transmission output level thereof has an error.

Where the radio transmission/reception function section (card A) 60 and the call-processing monitoring control function section 70 are not provided with the new functions of the present invention, the following problems occur.

The transmission output level error occurs not only by the breakdown in the radio unit section of the radio transmission/reception function section (card A) 60 but also other factors. For example, where an abnormal call is generated according to a breakdown in the base-band-signal processing function section (card B) 30 and a burst signal with a large amplitude is transmitted from the base-band-signal diffusion function section (card C) 40, the transmission output level of the radio transmission/reception function section (card A) 60 is determined to be under abnormal conditions. Whether or not the transmission output level is under the abnormal conditions is determined by detecting the input value and the output value through the radio transmission/reception function section (card A) 60. Where the resource that is set for the base-band-signal processing function section (card B) 30 is under abnormal conditions, the output value is determined to be abnormal (In that case, the input value remains the same). That is to say, an error of the radio unit section (that is, the radio transmission/reception function section (card A) 60), that is, the error that is to be primarily detected is erroneously detected by other factors, whereby the radio transmission/reception function section (card A) 60 itself is determined to be in a breakdown state and unusable. In that case, the radio transmission/reception function section (card A) 60 is brought to the breakdown state in appearance. Further, if the radio transmission/reception function section (card A) 60 is switched to the back-up radio transmission/reception function section (back-up card A) 21, the transmission output level error is detected again. As a result, a system interruption occurs.

That is to say, where the radio transmission/reception function section (card A) 60 meets the requirements for the transmission-output-level error detected by itself, the radio transmission/reception function section (card A) 60 is unconditionally brought to the breakdown state, which causes the system interruption.

In that case, the breakdown is caused by an abnormal resource state, not by the transmission output level error that is caused by the breakdown in the radio transmission/reception function section (card A) 60 and that is to be primarily detected. Therefore, the radio transmission/reception function section (card A) 60 should not be determined to be in the breakdown state and separation control is required for preventing a mobile communications system including the CDMA base station device 100 from being interrupted.

Accordingly, the present invention allows for discriminating between the state where both the transmission output level and the resource state are abnormal and the sate where the transmission output level is abnormal and the resource state is normal. Subsequently, erroneous detection relating to the radio transmission/reception function section (card A) 60 can be avoided.

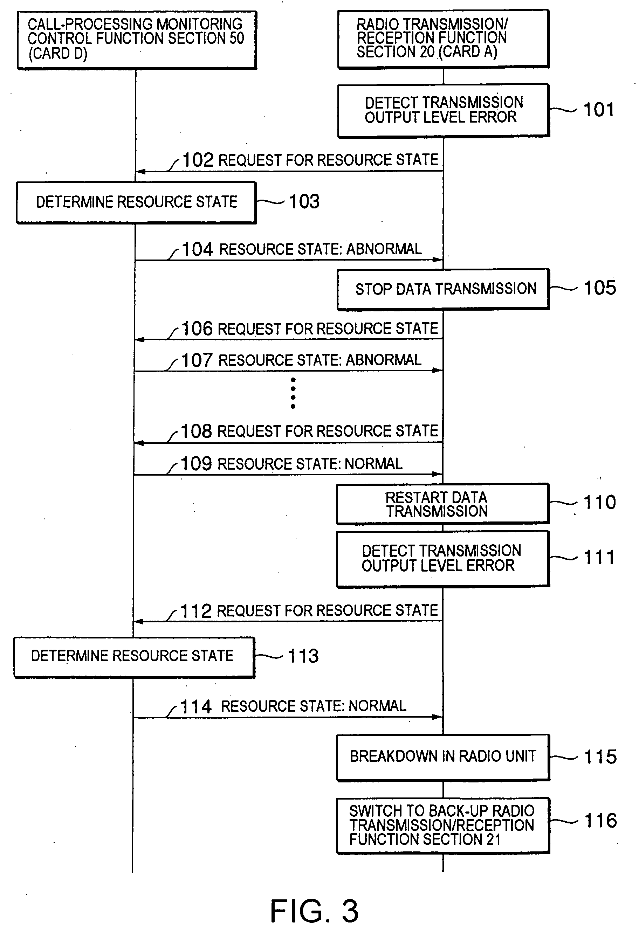

Fig. 3 is a sequence flowchart illustrating a method for preventing erroneous detection of a transmission output level error according to the present invention. First, operations performed in the abnormal resource state will be described, and operations performed in the normal resource state will be described.

First, the operations performed in the abnormal resource state will be described. Where the radio transmission/reception function section (card A) 60 detects an error of the transmission output level (step 101), the radio transmission/reception function section (card A) 60 issues the following request. That is to say, the radio transmission/reception function section (card A) 60 requests the call-processing monitoring control function section 70 to transmit a notification relating to the resource state for determining whether the error is caused by a breakdown in the radio unit section or the abnormal resource state due to a breakdown in the base-band-signal processing function section (card B) 30 (step 102). Upon receiving the request, the call-processing monitoring control function section (card D) 70 determines the resource state (step 103). Since the determination result indicates that the resource state is abnormal, the call-processing monitoring control function section (card D) 70 notifies the radio transmission/reception function section (card A) 60 that the resource state is abnormal (step 104).

Upon receiving the notification transmitted from the call-processing monitoring control function section (card D) 70, the radio transmission/reception function section (card A) 60 perceives that the resource state is abnormal and stops data transmission (step 105). The radio transmission/reception function section (card A) 60 keeps on requesting the call-processing monitoring control function section (card D) 70 to transmit the notification about the resource state until the resource state recovers from abnormal to normal (steps 106 and 108). Upon receiving the requests, the call-processing monitoring control function section (card D) 70 transmits a notification that the resource is abnormal so long as the resource state is not recovered from abnormal to normal (step 107).

Where the call-processing monitoring control function section (card D) 70 determines that the resource state becomes normal (the determination result becomes normal), the call-processing monitoring control function section (card D) 70 notifies the radio transmission/reception function section (card A) 60 of the result (step 109). Upon receiving the notification indicating that the resource state becomes normal transmitted from the call-processing monitoring control function section (card D) 70, the radio transmission/reception function section (card A) 60 restarts the data transmission (step 110) and goes back to normal operation.

Next, operations performed where the transmission output level error is detected and the resource state is normal will be described. Where the radio transmission/reception function section (card A) 60 detects the transmission output level error (step 111), the radio transmission/reception function section (card A) 60 issues the following request. That is to say, the radio transmission/reception function section (card A) 60 requests the call-processing monitoring control function section (card D) 70 to transmit a notification about the resource state for determining whether the error is caused by a breakdown in the radio unit section or the abnormal resource state caused by a breakdown in the base-band-signal processing function section (card B) 30 (step S112). Upon receiving the request, the call-processing monitoring control function section (card D) 70 determines the resource state (step 113) and notifies the radio transmission/reception function section (card A) 60 that the resource state is normal (step 114).

After being notified that the resource state is normal by the call-processing monitoring control function section (card D) 70, the radio transmission/reception function section (card A) 60 determines that a breakdown occurs in the radio unit section (step 115). Then, the radio transmission/reception function section (card A) 60 changes itself to the breakdown state, so as to switch to the back-up radio transmission/reception function section (back-up card A) 21 (step 116). This switching allows for preventing the mobile communications system from being interrupted.

As has been described, the radio transmission/reception function section (card A) 60 stops data transmission, where both the transmission output level and the resource state are abnormal. On the other hand, where the transmission output level is abnormal and the resource state is normal, switching from the radio transmission/reception function section (card A) 60 to the back-up radio transmission function section (back-up card A) 21 is performed. Thus, the determination whether the resource state is abnormal or normal allows for preventing the erroneous detection relating to the radio transmission/reception function section (card A) 60.

A first effect of the present invention is to prevent a mobile communications system including a radio base station device from being interrupted, where the interruption is caused by erroneous detection of a breakdown of the radio transmission/reception function section (card A). This is because the radio transmission/reception function section (card A) is notified of the resource state, so that the radio transmission/reception function section (card A) can discriminate between the error of the transmission output level caused by the breakdown in the radio transmission/reception function section (card A) and the abnormal resource state.

A second effect of the present invention is to reduce the time of operation stop caused by the abnormal resource state as much as possible and increase the quality stability of the entire system. This is because the radio transmission/reception function section (card A) stops data transmission, and keeps on requesting the call-processing monitoring control function section (card D) to transmit a notification about the resource state until the resource state recovers from abnormal to normal. Further, where the resource state becomes normal, the radio transmission/reception function section (card A) restarts the data transmission.

### Industrial Applicability

The present invention can be used for CDMA radio communications in general use.

## Claims

1. A method for preventing erroneous detection of a transmission output level error in a radio base station device including radio transmission/reception means for monitoring a transmission output level and performing radio transmission and radio reception, the method being **characterized in that** the radio transmission/reception means stops data transmission, where the transmission output level is abnormal and the state of a resource required for making call settings is abnormal.

2. A method for preventing erroneous detection of a transmission output level error in a radio base station device including radio transmission/reception means for monitoring a transmission output level and performing radio transmission and radio reception, and call-processing monitoring control means for assigning a resource required for making call settings and monitoring the state of the resource, the method being **characterized in that** the call-processing monitoring control means notifies the radio transmission/reception means about whether the resource state is normal or abnormal, where the radio transmission/reception means detects the transmission output level error, and the radio transmission/reception means stops data transmission by being notified that the resource state is abnormal and switches to back-up radio transmission/reception means by being notified that the resource state is normal.

3. A method for preventing erroneous detection of a transmission output level error in a radio base station device, the method being **characterized by** having the steps of:
detecting a transmission output level error through radio transmission/reception means;
requesting call-processing monitoring control means for assigning a resource required for making call settings and monitoring the state of the resource to transmit a notification about the resource state through the radio transmission/reception means;
determining the resource state and notifying the radio transmission/reception means about the determination result through the call-processing monitoring control means;
stopping data transmission through the radio transmission/reception means, where the call-processing monitoring control means notifies the radio transmission/reception means that the resource state is abnormal; and
switching from the radio transmission/reception means to back-up radio transmission/reception means, where the transmission output level is abnormal and the call-processing monitoring control means notifies the radio transmission/reception means that the resource state is normal.

4. A method for preventing erroneous detection of a transmission output level error in a radio base station device including radio transmission/reception means for monitoring a transmission output level and performing radio transmission and radio reception, and call-processing monitoring control means for assigning a resource required for making call settings and monitoring the state of the resource, the method being **characterized by** having the steps of:
detecting the transmission output level error through the radio transmission/reception means;
requesting the call-processing monitoring control means to transmit a notification about the resource state through the radio transmission/reception means;
determining the resource state through the call-processing monitoring control means;
notifying the radio transmission/reception means about the determination result through the call-processing monitoring control means;
stopping data transmission through the radio transmission/reception means, where the call-processing monitoring control means notifies the radio transmission/reception means that the resource state is abnormal;
keeping on requesting the call-processing monitoring control means to transmit a notification about the resource state through the radio transmission/reception means until the resource state is restored;
restarting the data transmission through the radio transmission/reception means, where the radio transmission/reception means receives a notification that the resource state becomes normal, the notification being transmitted from the call-processing monitoring control means; and
switching from the radio transmission/reception means to back-up radio transmission/reception means, where the transmission output level is abnormal and the call-processing monitoring control means notifies the radio transmission/reception means that the resource state is normal.

5. The method for preventing erroneous detection of the transmission output level error in the radio base station device according to any one of Claims 1 to 4, the method being **characterized in that** the transmission output level error is detected by comparing a difference between an input value transmitted to the radio transmission/reception means and an output value transmitted from the radio transmission/reception means to a predetermined threshold value.

6. A radio base station device including radio transmission/reception means for monitoring a transmission output level and performing radio transmission and radio reception, the radio base station device being **characterized in that** the radio transmission means stops data transmission, where the transmission output level is abnormal and the state of a resource required for making call settings is abnormal.

7. A radio base station device including radio transmission/reception means for monitoring a transmission output level and performing radio transmission and radio reception, and call-processing monitoring control means for assigning a resource required for making call settings and monitoring the state of the resource, the radio base station device being **characterized in that** the radio transmission/reception means requests the call-processing monitoring control means to transmit a notification about the resource state, where the radio transmission/reception means detects an error of the transmission output level, the radio transmission/reception means stops data transmission by being notified that the resource state is abnormal and restarts the data transmission by being notified that the resource state becomes normal, and the call-processing monitoring control means notifies the radio transmission/reception means of the resource state upon receiving the request transmitted from the radio transmission/reception means.

8. A radio base station device according to Claim 6 or Claim 7, the radio base station device being **characterized in that** the radio transmission/reception means switches to back-up transmission/reception means, where the radio transmission/reception means detects an error of the transmission output level and where the resource state is normal.

9. The radio base station device according to any one of Claims 6 to 8, the radio base station device being **characterized in that** the transmission output level error is detected by comparing a difference between an input value transmitted to the radio transmission/reception means and an output value transmitted from the radio transmission/reception means to a predetermined threshold value.

10. A radio communications terminal device **characterized by** performing radio communications between the radio communication terminal device and the radio base station device according to any one of Claims 6 to 9.
